# EUROPÄISCHE PATENTSCHRIFT

(11) **EP 2 545 133 B1**
(45) Veröffentlichungstag und Bekanntmachung des Hinweises auf die Patenterteilung: **16.04.2014**
(21) Anmeldenummer: 11706762.9
(22) Anmeldetag: 03.03.2011
(51) Int. Cl.: C09J 175/16, C09J 201/10

(54) **DUAL HÄRTENDE MASSE UND DEREN VERWENDUNG**
DUAL CURING COMPOUND AND USE OF SAME
MATIÈRE À DURCISSEMENT DOUBLE ET SON UTILISATION

(30) Priorität: 08.03.2010 DE 102010010598
(43) Veröffentlichungstag der Anmeldung: 16.01.2013
(73) Patentinhaber: Delo Industrieklebstoffe GmbH & Co. KGaA, 86949 Windach (DE)
(72) Erfinder: TRUE, Markus, 86179 Augsburg (DE); DENGLER, Dietmar, 86925 Seestall (DE); BORN, Robert, Dr., 80337 München (DE)
(74) Vertreter: Prinz & Partner
(86) Internationale Anmeldenummer: PCT/EP2011/001052
(87) Internationale Veröffentlichungsnummer: WO 2011/110305

(56) Entgegenhaltungen:
- EP-A1- 1 209 212
- WO-A1-2006/014786
- DE-A1-102005 029 282

## Beschreibung

Die Erfindung betrifft eine einkomponentige Masse, die bei Raumtemperatur flüssig ist und sowohl durch aktinische Strahlung als auch durch Feuchtigkeit vernetzbar ist. Die erfindungsgemäße Masse kann als Klebstoff, Beschichtungsmaterial oder Vergussmaterial verwendet werden. Bevorzugt ist die Verwendung zum Verfüllen von elektrooptischen Bauteilen.

Durch aktinische Strahlung vernetzbare Massen sind allgemein bekannt. Diese Massen enthalten üblicherweise wenigstens einen Photoinitiator für die radikalische Polymerisation, sowie radikalisch vernetzbare Monomere und/oder Prepolymere und wahlweise weitere Hilfsstoffe. Der Photoinitiator zerfällt durch die Bestrahlung, beispielsweise mit sichtbarem oder UV-Licht, in reaktive Radikale, mit denen die Polymerisation oder Vernetzung der Monomere gestartet wird. Da die radikalische Polymerisation mit hoher Reaktionsgeschwindigkeit abläuft, können sowohl lagerstabile als auch sehr schnell aushärtende Massen zur Verfügung gestellt werden. Nachteil der strahlungshärtenden Massen ist jedoch, dass in Schattenzonen keine Aushärtung des Materials stattfindet.

Aus der DE 10 2008 002163 A1 sind alpha-Alkoxysilane enthaltende Schmelzkleber bekannt, die durch Einwirken von Feuchtigkeit gehärtet werden können. Nachteilig ist, dass die Aushärtegeschwindigkeit dieser Massen nicht genügt, um schnelle automatische Fertigungsprozesse zu unterstützen. So ist die Feuchtigkeitshärtung selbst nach mehr als einer Woche nicht vollständig abgeschlossen. Aushärtezeiten im Bereich weniger Sekunden sind mit diesen Massen nicht zu erreichen.

Die DE 10 2007 042948 A1 betrifft Polymere, die durch Aufpfropfen von in alpha-Position heteroatomsubstituierten Silanen hergestellt werden, sowie deren Vernetzung durch Wasser. Auch diese Polymere härten erst nach mehreren Stunden vollständig aus und sind somit nicht für Prozesse geeignet, die schnelle Anfangsfestigkeiten erfordern.

Die DE 10351804 A1 betrifft ein Verfahren zur Erhöhung der Elastizität von feuchtigkeitsgehärteten Elastomeren aus alkoxyvernetzenden einkomponentigen Massen. Auch diese Massen zeigen Hautbildungszeiten erst nach vielen Minuten in Kontakt mit Feuchtigkeit und sind daher ebenfalls nicht für schnelle Härtungsprozesse geeignet.

Die DE 10 2005 029282 A1 legt silanvemetzende Kleb- oder Dichtstoffmassen offen, die neben einem silanvemetzenden Polymer zusätzlich spezielle Alphasilane mit mindestens zwei Ethoxygruppen enthalten. Die Hautbildung dieser Produkte erfolgt erst nach mehreren Minuten. Auch diese Massen können für schnelle, vollautomatische Prozesse nicht verwendet werden.

Die DE 10 2007 060536 A1 betrifft Beschichtungsmittel für Holz- und Kunststoffoberflächen. Die Beschichtungsmittel enthalten ein Polyolefin, das mindestens zwei Alkoxisilangruppen aufweist, (Meth)acrylgruppen aufweisende Verbindungen mit ein bis zehn strahlenreaktiven Gruppen sowie Katalysatoren und Photoinitiatoren. Die Beschichtungsmittel sind bei Raumtemperatur fest und durch aktinische Strahlung und Feuchtigkeit vernetzbar. Nachteilig ist, dass die bei Raumtemperatur festen Massen nicht über einfache Dosierungsverfahren flächig auf Substrate aufgetragen werden können und die endgecappten Polyolefine eine bei Raumtemperatur geringe Verträglichkeit mit Rezepturbestandteilen für die Strahlungshärtung besitzen.

WO 2006/014786 offenbart eine dual härtende Zusammensetzung, die in einer Komponente sowohl radikalisch polymerisierbare Gruppen als auch alpha-Alkoxysilangruppen enthält. Die Feuchtigkeitshärtung verläuft jedoch sehr langsam. Die EP 0934956 A1 beschreibt aushärtbare Formulierungen, die ein gesättigtes Kohlenwasserstoffpolymer enthalten, das mindestens eine unter Siloxanbildung vernetzende Gruppe enthält, ein Silanvernetzungsreagenz und eine Komponente, die in Gegenwart von atmosphärischem Sauerstoff oder mit Hilfe eines Photoinitiators polymerisiert werden kann. Nachteilig ist die sehr langsame Aushärtung unter Feuchtebedingungen. Die Strahlungshärtung wird ausschließlich dazu eingesetzt, um eine schnellere Anfangsfestigkeit der sonst rein feuchthärtenden Masse zu erzielen.

Die US 2009/0299017 A1 beschreibt einkomponentige, feuchtehärtende Zusammensetzungen, die verbesserte Adhäsionseigenschaften besitzen und einfach beschichtet werden können, nachdem die Zusammensetzung ausgehärtet wurde. Die beschriebenen Massen sind wegen der langsamen Aushärtung nicht für schnelle automatische Prozesse geeignet.

Die EP 2051227 A1 beschreibt Displays, die zwischen dem Anzeigeteil und der Schutzschicht ein ausgehärtetes Harz beinhalten.

Die EP 2133855 A1 und EP 2133856 A1 offenbaren Displays mit einer Schutzschicht, die mittels einer strahlungshärtenden Masse befestigt wird.

Die EP 2136348 A1 legt ein Display offen, das zwischen dem Anzeigeteil und der Schutzschicht ein gehärtetes Material enthält.

Die US 2009/0186552 A1 beschreibt strahlungs- und wärmehärtbare Harze zum Verbinden einer Schutzschicht mit einem Anzeigeteil in einem Display.

Die US 2009/0296033 A1 legt Displays offen, die zwischen der Schutzschicht und dem Anzeigeteil eines Displays ein härtbares Harz beinhalten.

Es besteht somit weiterhin die Aufgabe, lagerstabile Massen zur Verfügung zu stellen, die flüssig verarbeitet und sehr schnell ausgehärtet werden können, wobei gleichzeitig eine sichere Aushärtung im gesamten Volumen der Masse erreicht werden soll. Insbesondere sollen die Massen den Anforderungen an automatisiert ablaufende Fertigungsprozesse, insbesondere bei der Herstellung elektrooptischer Bauteile, genügen.

Diese Aufgabe wird erfindungsgemäß durch eine einkomponentige dual härtende Masse gemäß Anspruch 1 gelöst.

Vorteilhafte Ausführungsformen der erfindungsgemäßen Massen sind in den Unteransprüchen angegeben.

Gegenstand der Erfindung ist ferner die Verwendung der erfindungsgemäßen Massen als Klebstoff oder Dichtstoff für das Verkleben, Vergießen, Abdichten und Beschichten von Substraten, insbesondere die Verwendung zum Verfüllen von elektrooptischen Bauteilen wie Displays.

Gemäß der Erfindung wird eine einkomponentige, dual härtende Masse bereitgestellt, die bei Raumtemperatur flüssig ist und durch aktinische Strahlung sowie durch Feuchtigkeit vernetzbar ist, wobei die Masse mindestens eine Verbindung mit ein bis vier alpha-(Alkoxy)silangruppen enthält, jedoch mit Ausnahme von mit alpha-(Alkoxy)silangruppen substituierten Polyolefinen.

Alpha-(Alkoxy)silanverbindungen im Sinne der Erfindung sind solche Verbindungen, die eine oder mehrere (Alkoxy)silangruppe in alpha-Position zu einem Heteroatom wie Sauerstoff, Schwefel oder Stickstoff enthalten.

Bevorzugt sind alpha-(Alkoxy)silanverbindungen, bei denen die Alkoxysilangruppe mittels einer substituierten oder unsubstituierten Methylengruppe von dem Heteroatom getrennt ist.

Durch die erfindungsgemäßen Massen wird sowohl eine sehr schnelle Strahlungshärtung als auch eine schnelle Härtung durch Einwirken von Feuchtigkeit erreicht, so dass insgesamt schnelle Aushärteprozesse bei hoher Anfangsfestigkeit gewährleistet werden können. Deshalb können die erfindungsgemäßen Massen vorteilhaft in automatisierten Fertigungsprozessen eingesetzt werden. Insbesondere sind die erfindungsgemäßen Massen für Anwendungen geeignet, bei denen größere Flächen durch Bestrahlung zugänglich sind und kleinere Schattenzonen verbleiben, in denen eine nur strahlungshärtende Masse aber nicht aushärtet. In diesen Schattenzonen härten die erfindungsgemäßen Massen in ausreichender Zeit über die Einwirkung von Feuchtigkeit aus. In einer besonderen Ausführungsform werden die aushärtbaren Massen zum Verfüllen und zur vollflächigen Verbindung der im Strahlungsgang eines Displays befindlichen Teile und Schichten verwendet.

Die erfindungsgemäßen Massen sind außerdem lagerstabil, da keine Alkoxysilane auf der Grundlage von Polyolefinen verwendet werden. Polyolefine sind in flüssigen Rezepturen nicht mit den übrigen Komponenten der strahlungshärtenden Massen verträglich und neigen wegen der schlechten Löslichkeit in den radikalisch polymerisierbaren Monomeren und Prepolymeren bei Raumtemperatur zur Entmischung. Gerade zur Anwendung in automatisierten Fertigungsprozessen bei der Herstellung elektrooptischer Bauteile müssen jedoch flüssige und damit leicht dosierbare Massen eingesetzt werden.

Die erfindungsgemäße Masse umfasst mindestens eine alpha-(Alkoxy)silanverbindung zusammen mit wenigstens einem Photoinitiator, wenigstens einer strahlungshärtenden Verbindung und einem Katalysator für die Feuchtehärtung der alpha-(Alkoxy)silanverbindung.

Strahlungshärtende Verbindungen im Sinne der Erfindung sind solche Verbindungen, die unter der Einwirkung von aktinischer Strahlung, wie Elektronenstrahlen, UV-Strahlen und sichtbarem Licht, in Gegenwart eines Photoinitiators durch radikalische Polymerisation irreversibel vernetzen.

Die strahlungshärtende Verbindung umfasst vorzugsweise Monomere und/oder Prepolymere mit 1 bis 5 strahlungsinduziert radikalisch polymerisierbaren Gruppen, und ist besonders bevorzugt aus der Gruppe der (Meth)acrylsäureester, (Meth)Acrylsäureamide, Vinylether und Bismaleimide ausgewählt. Weitere bevorzugte radikalisch polymerisierbare Verbindungen sind Prepolymere auf der Grundlage von Polyolen oder Polyurethan, die mit strahlungshärtenden Gruppen wie (Meth)acrylsäureestern substituiert sind. Der Begriff "(Meth)acryl" soll im Folgenden sowohl für Acrylreste als auch Methacrylreste stehen.

Als Photoinitiatoren können die handelsüblichen Verbindungen eingesetzt werden, die unter Einwirkung von Elektronenstrahlen, UV-Strahlung und/oder sichtbarem Licht in reaktive Radikale zerfallen. Bevorzugt sind UV-Photoinitiatoren.

Als Katalysatoren zur Beschleunigung der Silanvernetzung unter Feuchtigkeitseinwirkung sind sowohl Säuren als auch Basen geeignet.

Erfindungsgemäß liegen die alpha-(Alkoxy)silanverbindung und die strahlungshärtende Verbindung als separate Bestandteile in der Masse vor.

Die erfindungsgemäße Masse umfasst bevorzugt 60 bis 99,89 Massenanteile der alpha-(Alkoxy)silanverbindung in Summe mit der strahlungsinduziert radikalisch polymerisierbaren Verbindung, 0,01 bis 20 Massenanteile des Photoinitiators und 0,001 bis 20 Massenanteile des Katalysators, bezogen auf 100 Massenanteile der vorgenannten Komponenten.

Besonders bevorzugt umfasst die erfindungsgemäße Masse (A) 5 bis 80 Massenanteile mindestens einer alpha-(Alkoxy)silanverbindung, (B) 5 bis 80 Massenanteile mindestens einer radikalisch polymerisierbaren Verbindung, als jeweils separate Komponenten, (C) 0,01 bis 20 Massenanteile des Photoinitiators und (D) 0,001 bis 20 Massenanteile des Katalysators, bezogen auf 100 Massenanteile der vorgenannten Komponenten (A) bis (D).

Die erfindungsgemäße Masse kann darüber hinaus weitere Modifikatoren sowie Silan-basierte Modifikatoren enthalten, die nicht alpha-(Alkoxy)silanverbindungen sind.

Bevorzugt ist die erfindungsgemäße Masse frei von Lösungsmitteln.

Besonders bevorzugt besteht die erfindungsgemäße Masse aus (A) 5 bis 80 Massenanteilen mindestens einer alpha-(Alkoxy)silanverbindung, (B) 5 bis 80 Massenanteilen mindestens einer strahlungshärtenden Verbindung, (C) 0,01 bis 20 Massenanteilen mindestens eines Photoinitiators für die radikalische Polymerisation, (D) 0,001 bis 20 Massenanteilen mindestens eines Katalysators für die Silanvemetzung, (E) 0 bis 70 Massenanteilen der weiteren Modifikatoren und (F) 0 bis 30 Massenanteilen der Silan-basierten Modifikatoren, wobei die Summe aller Massenanteile 100 ergibt.

### Komponente (A): alpha-(Alkoxy)silanverbindungen

Gemäß einer bevorzugten Ausführungsform der Erfindung entspricht die alpha-(Alkoxy)silanverbindung der folgenden Formel (I): 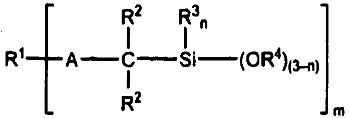 in der
R¹ ein aus der aus (i) linearen oder verzweigten, gesättigten oder ungesättigten Alkylresten mit 1 bis 8 C-Atomen, gegebenenfalls unterbrochen durch 1 bis 3 Heteroatome, (ii) gesättigten oder ungesättigten Cycloalkylresten mit 3-9 C-Atomen, gegebenenfalls unterbrochen durch 1 bis 3 Heteroatome, (iii) aromatischen Resten mit 5 bis 10 C-Atomen, (iv) Polyether, Polyamid, Polyester, Polycarbonat, Polyurethan, Polyharnstoff und Polyacrylat bestehenden Gruppe ausgewählter ein- bis vierbindiger Rest ist, wobei R¹ jeweils unsubstituiert oder substituiert sein kann, jedoch keine strahlungshärtenden Gruppen trägt,
jedes R² unabhängig ein aus der aus Wasserstoff, linearen, verzweigten, zyklischen, gesättigten, ungesättigten und aromatischen Kohlenwasserstoffen bestehenden Gruppe ausgewählter monovalenter Rest ist, der gegebenenfalls halogensubstituiert und/oder durch 1 bis 3 Heteroatome unterbrochen sein kann,
jedes R³ unabhängig ein monovalenter Rest ist, der aus der Gruppe der linearen, verzweigten, zyklischen, gesättigten, ungesättigten und aromatischen Kohlenwasserstoffen ausgewählt ist, und der gegebenenfalls halogensubstituiert oder durch 1 bis 3 Heteroatome unterbrochen sein kann,
jedes R⁴ unabhängig ein aus der aus Wasserstoff, linearen, verzweigten, zyklischen, gesättigten, ungesättigten und aromatische Kohlenwasserstoffen bestehenden Gruppe ausgewählter monovalenter Rest ist, der wahlweise halogensubstituiert oder durch 1-3 Heteroatome unterbrochen sein kann,
A ein heteroatomhaltiger zwei- oder dreibindiger Rest ist, der durch ein Heteroatom an die Gruppe -CR²₂-SiR³ₙ(OR⁴)₍₃₋ₙ₎ gebunden ist,
m = 1 bis 4, bevorzugt 2 oder 3, ist und
n = 0 bis 2 ist.

Der Rest R¹ bedeutet vorzugsweise ein Polymergrundgerüst aus Polyether, Polyester, ein Polycarbonat, Polyurethan, Polyamid oder Polyharnstoff, die wegen ihrer Polarität gut mit den weiteren Komponenten der erfindungsgemäßen Masse verträglich sind. Nicht geeignet und ausdrücklich ausgeschlossen sind Polyolefine und höhermolekulare Kohlenwasserstoffe mit mehr als 10 C-Atomen.

Die Substituenten auf dem Rest R¹ umfassen vorzugsweise Halogensubstituenten, sowie Oxo-, Hydroxy-, Alkoxy-, Aryloxy-, Acyloxy-, Sulfonato-, Sulfato-, Sulfinato-, Amino-, Alkylamino-, Dialkylamino-, Acylamino-, Imido-, Sulfonamido-, Imino-, Mercapto-, Alkylthio-, oder Arylthiosubstituenten.

Besonders bevorzugt ist R¹ ein Polyethylenglycol- oder Polypropylenglycolrest.

Der heteroatomhaltige Rest A bedeutet vorzugsweise einen heteroatomhaltigen zweibindigen Rest, wie beispielsweise -O-, -S-, -N(R)-, -C(O)-O-, -O-C(O)-O-, -O-C(O)-O-N(R)-, -N(R)-C(O)-O-, -S(O)-, -S(O)₂-, -S(O)-O-, -S(O)₂-O-, -O-S(O)₂-O-,-C(O)-N(R)-, -S(O)₂-N(R)-, -S(O)₂-N[C(O)R]-, -O-S(O)₂-N(R)-, -N(R)-S(O)₂-O-, -P(O)(OR)-O-, -O-P(O)(OR)-, -O-P(O)(OR)-O-, -P(O)(OR)-N(R)-, -N(R)-P(O)(OR)-, -O-P(O)(OR)-N(R)-, -N(R)-P(O)(OR)-O-, -N[C(O)R]-, -N=C(R)-O-, -C(R)=N-O-, -C(O)-N[C(O)R]-, -N[S(O)₂R']-, -C(O)-N[S(O)₂R']- oder -N[P(O)R"₂]-, wobei R für Wasserstoff oder gegebenenfalls substituierte C₁-C₂₀-Alkyl- oder C₆-C₂₀-Arylreste steht, R' für einen gegebenenfalls substituierten C₁-C₂₀-Alkyl- oder C₆-C₂₀-Arylrest steht, und R" für einen gegebenenfalls substituierten C₁-C₂₀-Alkyl, C₆-C₂₀-Aryl-, C₁-C₂₀-Alkoxy- oder C₆-C₂₀-Aryloxyrest steht.

Besonders bevorzugt bedeutet A in der allgemeinen Formel (I) ein Sauerstoff-oder Stickstoffatom, oder eine Carboxy-, Carbamat-, Carbonat-, Ureido-, Urethan-oder Sulfonatbindung.

R² bedeutet vorzugsweise Wasserstoff. R³ ist vorzugweise C₁-C₆-Alkyl, insbesondere Methyl oder Ethyl, oder Phenyl.

Der Rest R⁴ in der allgemeinen Formel (I) bedeutet vorzugsweise eine Methyl-oder Ethylgruppe. Bevorzugt ist n = 0 oder 1.

Gemäß einer weiteren bevorzugten Ausführungsform ist der Rest R² Wasserstoff, R³ und R⁴ bedeuten Methylgruppen und n = 1.

Bevorzugt weisen die alpha-(Alkoxy)silanverbindungen ein mittleres Molekulargewicht von 2.000 bis 50.000 g/mol, ganz besonders bevorzugt etwa 10.000 bis 20.000 g/mol auf.

Alpha-(Alkoxy)silanverbindungen sind kommerziell unter der Markenbezeichnung GENIOSIL^{®} von der Firma Wacker Chemie AG erhältlich. Die Herstellung von alpha-(Alkoxy)silanen ist ferner aus der DE 10 2007 042 948 A1 bekannt, auf die Bezug genommen wird.

Ungeeignet sind jedoch alpha-(Alkoxy)silane auf Basis von Polyolefinen, da keine bei Raumtemperatur stabilen, flüssigen Abmischungen mit den weiteren Komponenten möglich sind.

### Komponente (B): Strahlungshärtende Verbindungen

Die strahlungshärtenden Verbindungen der Komponente (B) weisen vorzugsweise 1 bis 5 strahlungsinduziert radikalisch polymerisierbare Gruppen auf, wie beispielsweise Acrylsäureester, Acrylsäureamide, Methacrylsäureester, Methacrylsäureamide, Vinylether und Bismaleimide

Besonders bevorzugt umfasst die Komponente (B) (Meth)acrylsäureester. Es können sowohl monofunktionelle als auch difunktionelle oder polyfunktionelle (Meth)acrylsäureester eingesetzt werden. Solche (Meth)acrylate umfassen beispielsweise Ester der Acrylsäure oder Methacrylsäure mit aromatischen, aliphatischen oder zykloaliphatischen Polyolen oder mit Polyetheralkoholen.

Als monofunktionelle (Meth)acrylate könne beispielsweise Ester der (Meth)acrylsäure mit einwertigen Alkoholen eingesetzt werden. Beispielsweise handelt es sich dabei um aliphatische und/oder aromatische Alkohole mit einer OH-Gruppe. Die Anzahl der C-Atome kann zwischen 1 - 30 C-Atomen betragen. Beispiele für solche Alkohole sind Methanol, Ethanol, Propanol, Butanol, Hexanol, Octanol, Decanol oder ihre Isomere, Alkylphenole, wie Nonylphenole, monofunktionelle niedermolekulare Polyether, wie einseitig verethertes Polyethylen, Polypropylen und Polybutylen mit bis zu 10 repetitiven Einheiten. Solche Alkohole können nach dem Fachmann bekannten Verfahren mit (Meth)acrylsäure zu den entsprechenden Estern umgesetzt werden. Beispiele für solche Verbindungen sind 2-Ethylhexyl(meth)acrylat, Octyl-/Decyl(meth)acrylat, Isobornyl(meth)acrylat, 3-Methoxybutyl(meth)acrylat, 2-Phenoxyethyl(meth)acrylat, Benzyl(meth)acrylat, 2-Methoxypropyl(meth)acrylat, Isophorylacrylat, Dicyclopentenylacrylat oder Dicyclopentenyloxyethylacrylat.

Zur Herstellung von polyfunktionellen (Meth)acrylaten kann eine Vielzahl von Polyolen eingesetzt werden. Geeignet sind beispielsweise aliphatische Polyole mit 2 bis 4 OH-Gruppen pro Molekül und 2 bis etwa 30 C-Atomen. Geeignete aliphatische Polyole sind insbesondere Ethylenglykol, 1,2-Propandiol oder 1,3-Propandiol, 1,4-Butandiol, 1,3-Butandiol, 2,3-Butandiol, 1,4-Butendiol, 1,5-Petandiol, Pentendiole, 1,6-Hexandiol, 1,8-Octandiol, Dodecandiol und höhere Homologe, Isomere und Gemische solcher Verbindungen. Ebenfalls geeignet sind höherfunktionelle Alkohole wie beispielsweise Glycerin, Trimethylolpropan, Pentaerythrit oder Zuckeralkohole, wie Sorbit oder Glucose, sowie oligomere Ether oder Umsetzungsprodukte mit Ethylenoxid oder Propylenoxid. Weiterhin können als Polyolkomponente zur Herstellung der (Meth)acrylate die Umsetzungsprodukte niedermolekularer, polyfunktioneller Alkohole mit Alkylenoxiden, sogenannte Polyetherpolyole, eingesetzt werden. Die Alkylenoxide weisen vorzugsweise zwei bis etwa vier C-Atome auf. Geeignet sind beispielsweise die Umsetzungsprodukte von Ethylenglycol, Propylenglycol, Glycerin, Trimethylolethan, Trimethylolpropan und Pentaerythrit mit Ethylenoxid, Propylenoxid oder Butylenoxid oder Gemischen davon.

Beispiele für derartige (Meth)acrylate sind Neopentylglykoldi(meth)acrylat, 1,8-Octandioldi(meth)acrylat, Butandioldi(meth)acrylat, 1,6-Hexandioldi(meth)acrylat, Trimethylolpropantri(meth)acrylat, Pentaerythrit-tetra(meth)acrylat, sowie (Meth)acrylsäureester des Sorbits und anderer Zuckeralkohole, Ethylenoxidmodifizierte Neopentylglykoldi(meth)acrylate, Ethylenoxid modifizierte 1,6-Hexandioldi(meth)acrylate, Polypropylenglykoldi(meth)acrylate, Pentaerythritol-tri(meth)acrylat, Dipentaerythritol-terta(meth)acrylat, Tris[(meth)acryloxyethyl]-isocyanurat, Polyethylenglykoldi(meth)acrylate oder Gemische davon.

Besonders geeignet sind Umsetzungsprodukte auf Basis von Polyetherpolyolen oder Polyalkylendiolen mit (Meth)acrylsäure mit einem Molekulargewicht (M_{N}) von 200 bis 8000 g/mol, vorzugsweise von 300 bis 6000 g/mol, insbesondere von etwa 1000 bis 3000 g/mol.

Eine weitere Gruppe von geeigneten (Meth)acrylgruppen aufweisenden Verbindungen sind Polyurethan(meth)acrylate. Bei diesen Verbindungen handelt sich um Umsetzungsprodukte von Alkoholen, insbesondere Monoalkoholen, Diolen und/oder Triolen mit Di- oder Triisocyanaten. Dabei werden die Mengenverhältnisse so gewählt, dass endständig NCO-funktionalisierte Oligomere erhalten werden. Die so erhaltenen Polyurethan-Prepolymere sind vorzugsweise linear, d.h. überwiegend aus Monoalkoholen oder Diolen und Diisocyanaten hergestellt. Eine zusätzliche Verwendung von geringen Anteilen an trifunktionellen Polyolen oder Isocyanaten ist möglich. Solche Polyurethan-Oligomere können dann mit OH-reaktiven (Meth)acrylverbindungen zu geeigneten funktionalisierten Polyurethan-Oligomeren umgesetzt werden.

Als Ausgangsverbindung können die für Klebstoffanwendungen bekannten monomeren Di- oder Triisocyanate eingesetzt werden. Beispiele für geeignete monomere Polyisocyanate sind 1,5-Naphthylendiisocyanat, 2,2'-;2,4'- und/oder 4,4'-Diphenylmethandiisocyanat (MDI), hydriertes MDI (H12MDI), Xylylendiisocyanat (XDI), Tetramethylxylylendiisocyanat (TMXDI), 4,4'-Diphenyldimethylmethandiisocyanat, 4,4'-Dibenzyldiisocyanat, 1,3-Phenylendiisocyanat, 1,4-Phenylendiisocyanat, Toluylendiisocyanat (TDI), 1-Methyl-2,4-diisocyanato-cyclohexan, 1,6-Diisocyanato-2,2,4-trimethylhexan, 1-Isocyanatomethyl-3-isocyanato-1,5,5-trimethylcyclohexan (IPDI), Tetramethoxybutan-1,4-diisocyanat (HDI), Dicyclohexylmethandiisocyanat, Cyclohexan-1,4-diisocyanat, Ethylendiisocyanat, Trimethylhexamethylendiisocyanat, 1,4-Diisocyanatobutan, 1,12-Diisocyanatododecan, Dimerfettsäurediisocyanat, oder Uretdion-, Biuret- oder Isocyanurate von Diisocyanaten.

Zur Verwendung als Polyol für solche PU-Oligomere geeignet sind beispielsweise niedermolekulare Oligomere, ausgewählt aus Polyester-polyolen, Polyether-polyolen, Polycarbonat-polyolen und Polyacetal-polyolen, die terminale OH-Gruppen aufweisen, oder aliphatische oder aromatische ein- bis dreiwertige Alkohole, mit einem Molekulargewicht (M_{N}), von vorzugsweise etwa 200 bis 2000 g/mol (zahlenmittleres Molekulargewicht M_{N}, wie durch GPC bestimmbar), insbesondere bis 1000 g/mol. Solche Polyole sind dem Fachmann bekannt und kommerziell erhältlich.

Die Umsetzung der Polyole mit den Polyisocyanaten kann in bekannter Weise, beispielsweise in Gegenwart von Lösungsmitteln, erfolgen. Bevorzugt wird jedoch in lösemittelfreier Form gearbeitet. Zur Beschleunigung der Reaktion wird üblicherweise die Temperatur erhöht, beispielsweise auf 40 bis 80°C. Gegebenenfalls können zur Beschleunigung der Reaktion die in der Polyurethanchemie üblichen Katalysatoren zum Reaktionsgemisch zugesetzt werden.

In einer weiteren Reaktion werden alle NCO-Gruppen anschließend mit Verbindungen umgesetzt, die eine funktionelle Gruppe tragen, die mit Isocyanaten reagieren kann, und die als weitere funktionelle Gruppe eine durch radikalische Polymerisation vernetzbare Doppelbindung aufweisen. Diese Verbindungen weisen üblicherweise ein Molekulargewicht von höchstens 1000 g/mol auf.

Beispiele für solche Verbindungen sind Ester und Amide von α-β-ungesättigten Carbonsäuren mit niedermolekularen, insbesondere aliphatischen, Alkoholen, die im Alkylrest noch eine weitere OH-Gruppe tragen. Entsprechende OH-Gruppen tragende Ester und Amide sind beispielsweise 2-Hydroxyethyl(meth)acrylamid, 2-Hydroxyethyl(meth)acrylat, 2-Hydroxypropyl(meth)acrylat, 3-Hydroxypropyl-(meth)acrylat, 3-Hydroxypropyl(meth)acrylamid, N-Hydroxymethyl(meth)acrylamid, Umsetzungsprodukte von Glycidylethern oder Glycidylestern mit Acryl- oder Methacrylsäure, partielle Umesterungsprodukte von Polyalkoholen wie Pentaerythrit, Glycerin oder Trimethylolpropan mit (Meth)acrylsäure.

Als strahlungshärtende Verbindung sind Monomere, Polymere oder Oligomere geeignet, die bis zu 5 strahlungsreaktive Gruppen enthalten. Bevorzugt liegt die strahlungshärtende Verbindung in Form von Oligomeren oder Monomeren vor, die 1 bis 3 strahlungsreaktive Gruppen tragen, wahlweise auch als Gemisch solcher Oligomere, Monomere oder Polymere.

Weiterhin sind Säureamide geeignet, wie beispielsweise: Acrylamid, N-Methylacrylamid, N-Methylmethacrylamid, N,N-Dimethylacrylamid, N,N-Dimethylmethacrylamid, N-Ethylmethacrylamid, N,N-Diethylacrylamid, N,N-Diethylmethacrylamid, N-Isopropylacrylamid, N-Buthylacrylamid, N-Buthylmethacrylamid, N-t-Butylacrylamid, N,N-Dibutylmethacrylamid, N-Phenylacrylamid, N-(Acryloyl)morpholin, N-(Acryloyl)piperidin, N-(Methacryloyl)piperidin, N-(1,1-Dimethyl-3-oxobutyl)acrylamid, N-1,1,3,3-Tetramethylbutylacrylamid, Dimethylen-bis-(meth)acrylamid, Tetramethylen-bis-(meth)acrylamid, Trimethyl-hexamethylen-bis-(meth)acrylamid, Tri(meth)acryloyldiethylentriamin und ähnliche Verbindungen.

Weiterhin geeignet sind Vinylether und Maleimide sowie Bismaleimide. Typische Beispiele für Vinylether-haltige Monomere sind Methylvinylether, Ethylvinylether, Hydroxybutylvinylether, tert-Butylvinylether, Isobutylvinylether, Triethylenglykoldivinylether (erhältlich unter der Handelsbezeichnung "RAPI-CURE™ DVE-3" von International Specialty Products, Wayne, NJ), 1,4-Cyclohexandimethanoldivinylether (RAPI-CURE CHVE, International Specialty Products), Trimethylolpropantrivinylether (TMPTVE, erhältlich von der BASF Corp., Mount Olive, NJ), Divinyletherharze, erhältlich unter der Handelsbezeichnung "VECTOMER^{®}" von Morflex, Greensboro, N. C. (wie z.B. VECTOMER 2010, VECTOMER 2020, VECTOMER 4010 und VECTOMER 4020) und ähnliche Materialien von anderen Herstellern und Gemische davon.

Bevorzugte Maleimide, die in der vorliegenden Erfindung verwendet werden können, entsprechen der folgenden allgemeinen Formel (II) oder sind Isomere und Vorläufer davon: 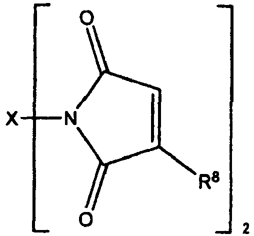 in der:
jedes R⁸ unabhängig voneinander aus Wasserstoff und C₁-C₁₂-Alkyl ausgewählt ist und
X ein mehrwertiger Rest ist, der aus der Gruppe der verzweigtkettigen Alkylen-oder Alkylenoxidreste mit etwa 12 bis etwa 500 Kohlenstoffatomen im Grundgerüst und der aromatischen Gruppen mit der Struktur: 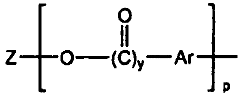
ausgewählt ist, wobei
p = 1, 2 oder 3 ist,
y = 0 oder 1 ist
jedes Ar unabhängig ein monosubstituierter oder trisubstituierter aromatischer oder heteroaromatischer Ring mit 3 bis 10 Kohlenstoffatomen ist und
Z eine verzweigtkettige Alkylen- oder Alkylenoxidgruppe mit etwa 12 bis etwa 500 Kohlenstoffatomen in ihrem Grundgerüst ist,
einschließlich Gemischen davon.

### Komponente (C): Photoinitiatoren für die radikalische Polymerisation

Als Photoinitiatoren für die radikalische Polymerisation können die üblichen, im Handel erhältlichen Verbindungen eingesetzt werden, wie beispielsweise α-Hydroxyketone, Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyl-diphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren können beispielsweise die IRGACURE^{®}-Typen von Ciba Speciality Chemicals eingesetzt werden, so beispielsweise die Typen IRGACURE^{®} 184, IRGACURE^{®} 500, IRGACURE^{®} 1173, IRGACURE^{®} 2959, IRGACURE^{®} 745, IRGACURE^{®} 651, IRGACURE^{®} 369, IRGACURE^{®} 907, IRGACURE^{®} 1300, IRGACURE^{®} 819, IRGACURE^{®} 819DW, IRGACURE^{®} 2022, IRGACURE^{®} 2100, IRGACURE^{®} 784 und IRGACURE^{®} 250. Ferner sind die DAROCUR^{®}-Typen von Ciba Speciality Chemicals verwendbar, so beispielsweise die Typen DAROCUR^{®} MBF, DAROCUR^{®} 1173, DAROCUR^{®} TPO und DAROCUR^{®} 4265.

### Komponente (D): Katalysatoren für die Silanvernetzung

Als Katalysatoren zur Beschleunigung der Silanvernetzung unter Feuchtigkeitseinwirkung sind sowohl Säuren als auch Basen geeignet.

Die Katalysatoren sind vorzugsweise ausgewählt aus der Gruppe der anorganischen und organischen Säuren, der aliphatischen primären, sekundären und teritären Monoamine, Diamine und Polyamine, der Amidine, der Aldimine, der Ketimine, der Enamine, der Oxazolidine und der schwermetallhaltigen metallorganischen Verbindungen.

Geeignete Säuren sind beispielsweise Carbonsäuren wie Acrylsäure, Methacrylsäure, Diacrylsäure, Maleinsäure, Itaconsäure und Essigsäure, Organosulfonsäuren wie Trifluormethansulfonsäure und Toluolsulfonsäure sowie anorganische Säuren wie Phosphorsäuren und Phosphorsäureester, Salzsäure und Borsäure.

Als Basen können aminogruppenhaltige organische Verbindungen eingesetzt werden, beispielsweise aliphatische primäre, sekundäre und tertiäre Monoamine, Diamine und Polyamine, aromatische Amine, zyklische und heterozyklische Amine sowie Aminosilane, aber auch Amidine und latente Amine wie Aldimine, Ketimine, Enamine und Oxazolidine. Als nicht einschränkende Beispiele werden Butylamin, Ethylendiamin, Dibutylamin, Triethylamin, N,N-Bis-(N,N-diemthyl-2-aminoethyl)-methylamin, Triethanolamin, Cyclohexylamin, N,N-Diemthylcyclohexylamin, Benzylamin, 3-Aminopropyltrimethoxysilan, N-(2-Aminoethyl)-3-aminopropyl-trimethoxysilan (DAMO), Cyclohexylaminomethyltrimethoxysilan, Anilin, Diphenylamin, N,N-Dimethylphenylamin, Piperidine, wie 2,2,6,6-Tetramethylpiperidin, Piperazine, Morpholine, wie N-Ethylmorpholin und Morpholin, 1,4-Diazabicyclo[2.2.2]octan (DABCO), Guanidine, wie Tetramethylguanidin, 1,8-Diazabicyclo[5.4.0]undec-7-en (DBU), 1,5-Diazabicyclo[4.3.0]non-5-en (DBN), Dicyandiamid, Pyrimidine, Aminopyrimidine, Imidazoline, Imidazole, Biguanide und Tetramethyliminodiisopropylamin genannt.

Außerdem können als Katalysatoren organische Schwermetallverbindungen eingesetzt werden, beispielsweise Carboxylate oder andere organische Verbindungen von Blei, Eisen, Titan, Zink, Zinn, Bismut, Kobalt, Zirkonium, Vanadium und Nickel. Als nicht limitierende Beispiele seien genannt Dibutylzinndilaurat (DBTL), Dibutylzinndiacetat, Dibutylzinnoxid, Tetrabutyltitanat, Eisenacetylacetonat, Kobaltnaphthenat und Bleidioctoat.

Auch die gleichzeitige Verwendung von Säuren und Basen in einer Masse ist möglich. Damit können besonders schnelle Aushärtereaktionen durch Luftfeuchtigkeit erzielt werden, ohne dass eine Instabilität der Masse zu beobachten ist.

Bevorzugt sind die erfindungsgemäßen Massen schwermetalfrei. Besonders bevorzugt wird auf den Einsatz von zinnhaltigen Katalysatoren als Komponente (D) verzichtet. Aus toxikologischer Sicht wird die Verwendung schwermetallhaltiger, insbesondere zinnhaltiger Verbindungen zunehmend kritisch beurteilt.

### Komponente (E): Weitere Modifikatoren

Die erfindungsgemäßen Massen können außerdem einen oder mehrere zusätzliche Modifikatoren als weiteren Bestandteil enthalten. Die Modifikatoren sind vorzugsweise aus der Gruppe der Füllstoffe, Farbstoffe, Pigmente, Fluoreszenzmittel, Stabilisatoren, Feuchtigkeitsfänger, Beschleuniger, Haftvermittler, Vernetzer, Fließverbesserer, Benetzungsmittel, Thixotropierungs-mittel, Verdünnungsmittel, Flexibilisierer, polymeren Verdickungsmittel, Flammschutzmittel, Korrosionsinhibitoren, Weichmacher und Tackyfier ausgewählt.

### Komponente (F): Silan-basierte Modifikatoren

Die erfindungsgemäße Masse kann schließlich weitere Silan-basierte Modifikatoren zur Unterstützung der Feuchtehärtung enthalten, die nicht alpha-Alkoxysilanverbindungen sind. Bevorzugt entsprechen die Silan-basierten Modifikatoren der allgemeinen Formel (III): 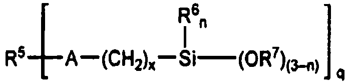 in der
R⁵ ein lineares oder verzweigtes zwei- bis neunbindiges polymeres Grundgerüst ist, beispielsweise ein Polyether, Polyamid, Polyester, Polycarbonat, Polyurethan, Polyharnstoff oder Polyacrylat,
jedes R⁶ unabhängig ein monovalenter Rest aus der Gruppe der linearen, verzweigten oder zyklischen, gesättigten, ungesättigten oder aromatischen Kohlenwasserstoffe ist, die gegebenenfalls halogensubstituiert oder durch 1 bis 3 Heteroatome unterbrochen sein können,
jedes R⁷ unabhängig Wasserstoff oder ein monovalenter Rest aus der Gruppe der linearen, verzweigten oder zyklischen, gesättigten, ungesättigten oder aromatischen Kohlenwasserstoffe ist, die gegebenenfalls halogensubstituiert oder durch 1-3 Heteroatome unterbrochen sein können,
A ein heteroatomhaltiger zwei- oder dreibindiger Rest ist, der durch ein Heteroatom, beispielsweise Sauerstoff, Stickstoff oder Schwefel, an die Gruppe -(CH₂)ₓ-SiR⁶ₙ(OR⁷)₍₃₋ₙ₎ gebunden ist,
n = 0-2 ist,
q = 2-9 ist und
x = 2-5 ist

Der heteroatomhaltige Rest A hat vorzugsweise die für die Komponente (A) angegebenen Bedeutungen. R⁶ ist vorzugweise C₁-C₈-Alkyl, insbesondere Methyl oder Ethyl, oder Phenyl.

Der Rest R⁷ bedeutet vorzugsweise eine Methyl- oder Ethylgruppe und n ist bevorzugt 0 oder 1 und x ist bevorzugt 3.

Gemäß einer besonderen Ausführungsform der Erfindung werden die oben beschriebenen Massen zum Laminieren unterschiedlicher Schichten in elektrooptischen Bauteilen, wie z.B. Displays verwendet. Derartige Bauteile werden in sehr hohen Stückzahlen und vollautomatischen Prozessen gefertigt. Eine rationelle Fertigung dieser Bauteile setzt daher voraus, dass die ausgehärteten reaktiven Massen sehr schnell eine hohe Anfangsfestigkeit erreichen, damit die Bauteile ohne Verzögerung in den nächsten Fertigungsschritt überführt werden können.

Die erfindungsgemäßen Massen können durch den transparenten Teil eines Displays hindurch belichtet werden und härten dort innerhalb weniger Sekunden aus. Es können alle Lampen des Stands der Technik eingesetzt werden. Die Massen zeichnen sich durch exzellente Transparenz aus und neigen auch bei Temperatur und Feuchteeinlagerung nicht zur Vergilbung. Im Randbereich der elektrooptischen Bauteile ist in den meisten Fällen jedoch ein Rahmen vorgesehen, der nicht durchstrahlt werden kann und deshalb eine Schattenzone bildet.

In dieser Schattenzone härtet die erfindungsgemäße Masse nicht durch eine Belichtung aus. Die erfindungsgemäßen Massen zeigen aber schon nach wenigen Stunden eine weitgehende Aushärtung durch Zutritt von Feuchtigkeit in diesen Bereichen. Es wird somit verhindert, dass die Masse ausgasen oder in andere Bereiche verfließen kann und damit die Lebensdauer des elektrooptischen Bauteils vermindert werden würde.

Die Erfindung wird nachfolgend anhand bevorzugter Ausführungsbeispiele unter Bezugnahme auf die Zeichnungen beschrieben, die jedoch nicht in einem einschränkenden Sinn verstanden werden sollen.

In der Zeichnung zeigen

Abb. 1 eine Rheometerkurve zur Ermittlung der Aushärtezeit bei Belichtung der Masse gemäß Vergleichsbeispiel 1; und
die Abbildungen 2 bis 7 Rheometerkurven bei Belichtung der erfindungsgemäßen Beispiele 1 bis 6.

In den folgenden Beispielen ist "Feuchtigkeit" definiert als 20% relative Luftfeuchtigkeit bei 23,5 °C oder die Feuchtigkeit auf Substratoberflächen unter diesen Bedingungen.

Unter Belichtung wird eine Bestrahlung mit einer Lichtleiterlampe DELOLUX 04 der Firma DELO mit einer Intensität von 55±3 mW/cm² verstanden.

Raumtemperatur ist 23 °C ± 2 °C

"Vernetzung" oder "Aushärtung" werden definiert als Polymerisations- oder Kondensationsreaktion über den Gelpunkt hinaus.

Zur Herstellung der dual vernetzenden, einkomponentigen Massen wurden die Rohstoffe unter trockener Luft vermischt, wobei die Zugabe der Katalysatoren als jeweils letzter Schritt erfolgte. Die eingesetzten Polyurethanacrylate wurden bezogen von Japan U-PICA Co., Ltd., die Alkoxysilane vom Typ GENIOSIL^{®} von Wacker Chemie AG, das Silan-gepfropfte Polyolefin Vestoplast^{®} EP2403 von Evonik Industries AG und das Oxazolidin Incozol^{®} 2 von Incorez Ltd.

Die Zusammensetzung der so hergestellten Massen ist in der nachfolgenden Tabelle angegeben.

| | Vergleichsbeispiel 1 | Vergleichsbeispiel 2 | Beispiel 1 | Beispiel 2 | Beispiel 3 | Beispiel 4 | Beispiel 5 | Beispiel 6 |
|---|---|---|---|---|---|---|---|---|
| U-Pica 180 | 60,6 | 60,6 | 60,6 | - | - | - | - | - |
| U-Pica 300 | - | - | - | 60,97 | 60,9 | 61,5 | 60 | 61 |
| Geniosil STP-E10 | - | - | 30 | 30 | 30 | 30 | 30 | 30 |
| Geniosil STP-E15 | 30 | - | - | - | - | - | - | - |
| Vestoplast EP2403 | - | 30 | - | - | - | - | - | - |
| Irgacure 184 | 3 | 3 | 3 | 3 | 3 | 3 | 3 | 3 |
| VTMO | 6 | 6 | 6 | 6 | 6 | 1 | 6 | - |
| Geniosil XL 63 | - | - | - | - | - | 1,5 | - | 3 |
| Acrylsäure | - | - | - | - | - | 3 | - | 3 |
| DAMO | 0,4 | 0,4 | 0,4 | - | - | - | - | - |
| DBU | - | - | - | 0,03 | - | - | - | - |
| TMG | - | - | - | - | 0,1 | - | - | - |
| Incozol 2 | - | - | - | - | - | **-** | 1 | - |
| Reaktivität Lichthärtung [s] | 6 | n/a | 5 | 13 | 12 | 3 | 11 | 3 |
| Hautbildungszeit | > 2 Tage | n/a | 75 min | 60 min | 60 min | 315 min | 270 min | 510 min |
| Durchhärtungstiefe / 24h [mm] | 0,0 | n/a | 1,3 | 2,0 | 2,1 | 3,1 | 0,8 | 2,5 |
| Viskosität [mPas] | 7.000 | n/a | 8.800 | 26.500 | 26.500 | 38.000 | 23.000 | 10.200 |
| Viskosität [mPas] nach 3d Lagerung bei 50°C | n/a | n/a | 8.300 | 26.400 | 28.500 | 42.000 | 30.160 | 13.100 |
| Optische Beurteilung | farblos klar | breiig trüb, inhomogen | farblos klar | farblos klar | farblos klar | farblos klar | farblos klar | farblos klar |

Die in der Tabelle verwendeten Abkürzungen bedeuten Folgendes:
- VTMO: Vinyltrimethoxysilan
- DAMO: N-(2-Aminoethyl)-3-aminopropyltrimethoxysilan
- DBU: 1,8-Diazabicyclo[5.4.0]undec-7-en
- TMG: 1,1,3,3-Tetramethylguanidin
- n/a: nicht bestimmt

Erfindungsgemäße Klebstoffmassen, die alpha-(Alkoxy)Silanverbindungen enthalten, können Amin-katalysiert, jedoch ohne die Verwendung zusätzlicher Schwermetallkatalysatoren, innerhalb weniger Minuten bis Stunden durch Reaktion mit Luftfeuchtigkeit vernetzen. Vergleichsbeispiel 1 zeigt, dass entsprechende Massen mit gamma-(Alkoxy)Silanverbindungen hierfür ein Vielfaches der Zeit benötigen.

Alpha-(Alkoxy)silan-modifizierte Polyolefine (Vergleichsbeispiel 2) lassen sich mit Acrylaten dagegen nicht zu lagerstabilen, homogenen, flüssigen Reaktivklebstoffen verarbeiten.

Aus Beispiel 4 ist ersichtlich, dass auch die Verwendung von Säuren als Katalysator für die Vernetzung von alpha-(Alkoxy)silan-funktionalisierten Prepolymeren eine Hautbildungszeit von wenigen Stunden bei guter Durchhärtungstiefe ermöglicht.

Die Verwendung von feuchtigkeitsempfindlichen, latenten Aminen ermöglicht eine gute Verarbeitungsstabilität, was in Beispiel 5 mit der im Vergleich geringen Viskosität der flüssigen Klebstoffmasse gezeigt wird.

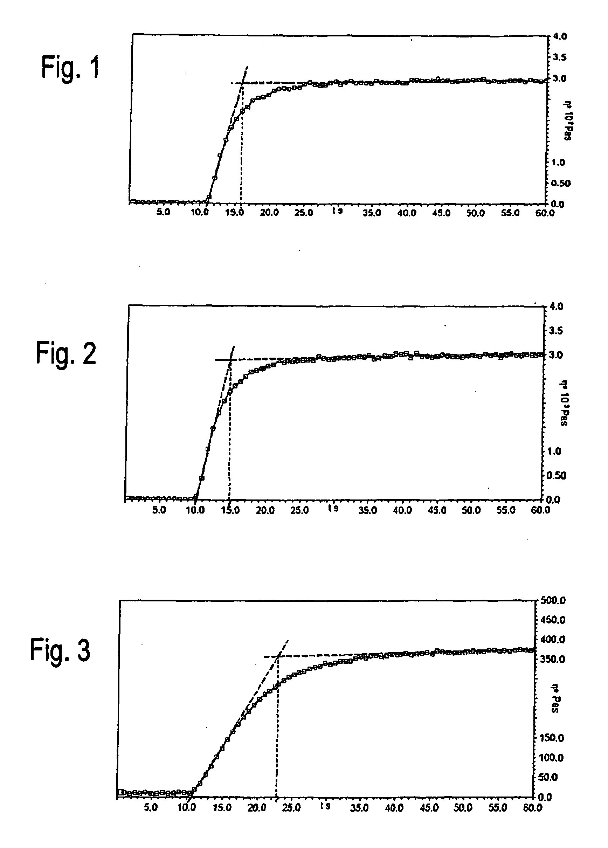

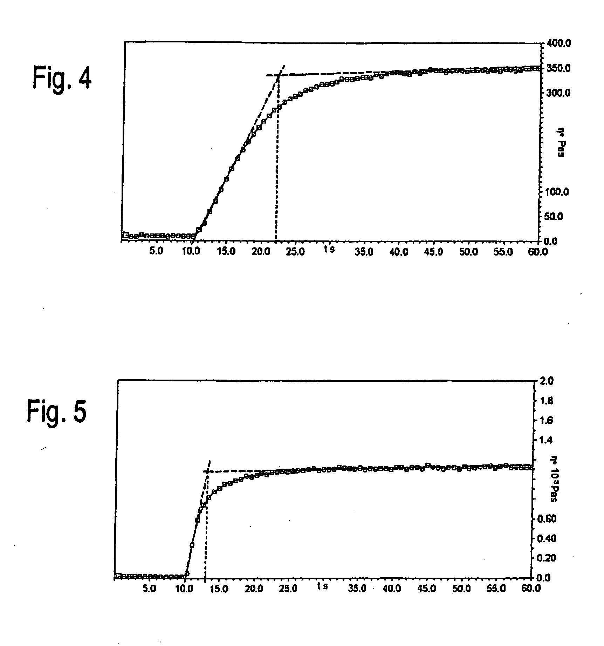

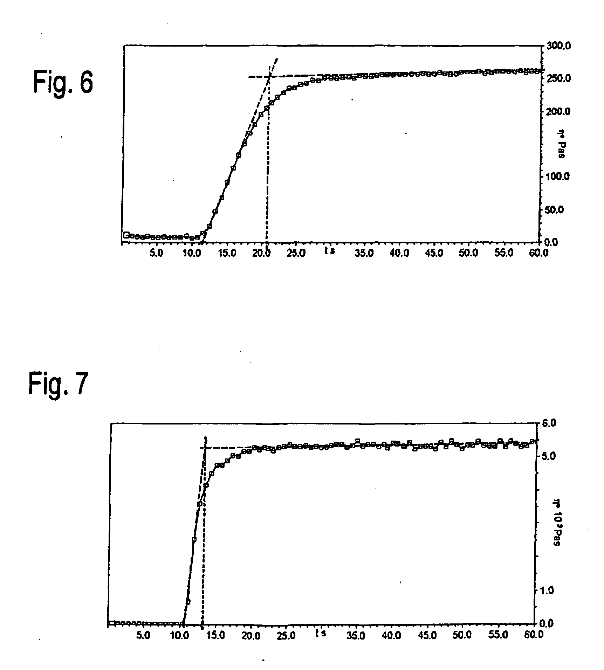

Die Reaktivität der Massen bei Belichtung wurde mittels eines Bohlin CS-Rheometers CVO PP 9 mit Photorheologievorrichtung und einer Lichtleiterlampe DELOLUX 04 ermittelt. Der Belichtungsstart erfolgte dabei 10 Sekunden nach Start der Messung. Die Reaktionszeit ist definiert als Zeitwert am Schnittpunkt der Tangenten der maximalen Steigung und der Endviskosität. Eingestellt wurden eine Lichtintensität von 55±3 mW/cm², eine kontinuierliche Oszillation mit 10 Hz, eine Temperatur von 23,5 °C, eine Schichtdicke von 100 µm und eine Solldeformation von 5%. In den Figuren 1 bis 7 sind für die verschiedenen Beispiele die gemessenen Viskositätswerte über die Zeit dargestellt.

Die Hautbildungszeiten wurden bei einer relativen Luftfeuchtigkeit von 20±1% und einer Temperatur von 23,5 °C durch Prüfung der Oberfläche mit einem Spatel bestimmt. Dazu wurden 2 g der Masse in eine quadratische Form mit einer Kantenlänge von 3 cm gegossen. Als Hautbildungszeit gilt derjenige zeitliche Wert, bei dem bei Berührung der Oberfläche kein Fadenzug mehr beobachtet werden kann.

Zur Ermittlung der Durchhärtungstiefe innerhalb von 24 Stunden wurden 6 g der Masse bei einer relativen Luftfeuchtigkeit von 20±1% und einer Temperatur von 23,5 °C in ein zylindrisches Gefäß aus Polyethylen mit einem Innendurchmesser von 2,2 cm gegossen. Nach 24 Stunden wurde die vernetzte Schicht von der flüssigen Masse abgenommen und die durchschnittliche Dicke gemessen.

Die komplexe Viskosität wurde mit einem Rheometer Physica MCR301 von Anton Paar mit einem standardisierten Messkegel CP20-1 bei 23,5 °C gemessen und bei einer Scherrate von 1/Sekunde bestimmt. Zur Beurteilung der Lagerstabilität wurde die Viskositätsmessung bei Raumtemperatur nach drei Tagen Lagerung der Massen bei 50 °C unter Lichtausschluss wiederholt. Die Massen gelten als lagerstabil, bis sich die Viskosität unter den Lagerbedingungen verdoppelt hat.

Die erfindungsgemäßen Massen ergeben somit lagerstabile Reaktivklebstoffe, die unter Belichtung schnell und mit hoher Anfangsfestigkeit und zusätzlich in unbelichteten Schattenzonen unter Feuchtigkeitseinfluss mit einer für industrielle Fertigungsprozesse ausreichenden Geschwindigkeit aushärten.

## Patentansprüche

1. Einkomponentige dual härtende Masse, die bei Raumtemperatur flüssig ist und durch aktinische Strahlung sowie durch Feuchtigkeit vernetzbar ist, bestehend aus
(A) 5-80 Massenanteilen mindestens einer alpha-(Alkoxy)silanverbindung mit ein bis vier alpha-(Alkoxy)Silangruppen, jedoch mit Ausnahme von mit alpha-Alkoxysilangruppen substituierten Polyolefinen;
(B) 5-80 Massenanteilen mindestens einer strahlungshärtenden Verbindung mit 1-5 strahlungsinduziert radikalisch polymerisierbaren Gruppen, wobei die Komponenten (A) und (B) als separate Verbindungen vorliegen;
(C) 0,01-20 Massenanteilen mindestens eines Photoinitiators für die radikalische Polymerisation,
(D) 0,001-20 Massenanteilen mindestens eines Katalysators für die Silanvernetzung durch Feuchtigkeit, ausgewählt aus der Gruppe der anorganischen und organischen Säuren, der aliphatischen primären, sekundären und tertiären Monoamine, Diamine und Polyamine, der Amidine, der Aldimine, der Ketimine, der Enamine, der Oxazolidine und der schwermetallhaltigen metallorganischen Verbindungen sowie deren Mischungen,
(E) 0-70 Massenanteilen wenigstens eines Modifikators, ausgewählt aus der Gruppe der Füllstoffe, Farbstoffe, Pigmente, Fluoreszenzmittel, Stabilisatoren, Feuchtigkeitsfänger, Beschleuniger, Haftvermittler, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier, allein oder in Kombination miteinander,
und
(F) 0-30 Massenanteilen eines Silan-basierten Modifikators der allgemeinen Formel (III) 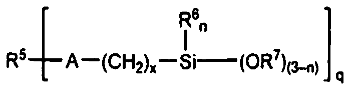 in der
R⁵ ein lineares oder verzweigtes zwei- bis neunbindiges polymeres Grundgerüst ist, beispielsweise ein Polyether, Polyamid, Polyester, Polycarbonat, Polyurethan, Polyharnstoff oder Polyacrylat,
jedes R⁶ unabhängig ein monovalenter Rest aus der Gruppe der linearen, verzweigten oder zyklischen, gesättigten, ungesättigten oder aromatischen Kohlenwasserstoffe ist, der gegebenenfalls halogensubstituiert oder durch 1-3 Heteroatome unterbrochen sein kann,
jedes R⁷ unabhängig Wasserstoff oder ein aus der Gruppe der linearen, verzweigten, zyklischen, gesättigten, ungesättigten und aromatischen Kohlenwasserstoffen ausgewählter Rest ist, der gegebenenfalls halogensubstituiert oder durch 1-3 Heteroatome unterbrochen sein kann,
A ein heteroatomhaltiger zwei- oder dreibindiger Rest ist, der durch ein Heteroatom, insbesondere Sauerstoff, Stickstoff oder Schwefel, an die Gruppe -(CH₂)ₓ-SiR⁶ₙ(OR⁷)₍₃₋ₙ₎ gebunden ist,
n = 0-2 ist,
q = 2-9 ist und
x = 2-5 ist;
wobei die Summe aller Massenanteile 100 ergibt.

2. Masse nach Anspruch 1, **dadurch gekennzeichnet, dass** mindestens eine alpha-Alkoxysilanverbindung der folgenden Formel (I) entspricht: 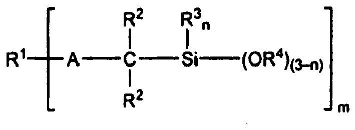 in der
R¹ ein aus der aus (i) linearen oder verzweigten, gesättigten oder ungesättigten Alkylresten mit 1 bis 8 C-Atomen, gegebenenfalls unterbrochen durch 1 bis 3 Heteroatome, (ii) gesättigten oder ungesättigten Cycloalkylresten mit 3-9 C-Atomen, gegebenenfalls unterbrochen durch 1 bis 3 Heteroatomen, (iii) aromatischen Resten mit 5 bis 10 C-Atomen, (iv) Polyether, Polyamid, Polyester, Polycarbonat, Polyurethan, Polyharnstoff oder Polyacrylat bestehenden Gruppe ausgewählter ein- bis vierbindiger Rest ist,
jedes R² unabhängig ein aus der aus Wasserstoff, linearen, verzweigten, zyklischen, gesättigten, ungesättigten und aromatische Kohlenwasserstoffen bestehenden Gruppe ausgewählter monovalenter Rest ist, der gegebenenfalls halogensubstituiert und/oder durch 1-3 Heteroatome unterbrochen sein kann,
jedes R³ unabhängig ein monovalenter Rest ist, der aus der Gruppe der linearen, verzweigten, zyklischen, gesättigten, ungesättigten und aromatischen Kohlenwasserstoffen ausgewählt ist, und der gegebenenfalls halogensubstituiert oder durch 1 bis 3 Heteroatome unterbrochen sein kann,
jedes R⁴ unabhängig ein aus der aus Wasserstoff, linearen, verzweigten, zyklischen, gesättigten, ungesättigten und aromatische Kohlenwasserstoffen bestehenden Gruppe ausgewählter monovalenter Rest ist, der wahlweise halogensubstituiert oder durch 1-3 Heteroatome unterbrochen sein kann,
A ein heteroatomhaltiger zwei- oder dreibindiger Rest ist, der durch ein Heteroatom, insbesondere Sauerstoff, Stickstoff oder Schwefel, an die Gruppe -CR²₂-SiR³ₙ(OR⁴)₍₃₋ₙ₎ gebunden ist,
m = 1 bis 4 ist und
n = 0 bis 2 ist.

3. Masse nach Anspruch 2, **dadurch gekennzeichnet, dass** R⁴ eine Methyl-oder Ethylgruppe bedeutet und n = 0 oder 1 ist.

4. Masse nach Anspruch 2 oder 3, **dadurch gekennzeichnet, dass** R² Wasserstoff ist, R³ und R⁴ Methylgruppen bedeuten und n = 1 ist.

5. Masse nach einem der Ansprüche 2 bis 4, **dadurch gekennzeichnet, dass** A in der allgemeinen Formel (I) eine Carboxy-, Carbamat-, Carbonat-, Ureido-, Urethan- oder Sulfonatbindung ist oder ein Sauerstoff- oder Stickstoffatom bedeutet.

6. Masse nach einem der Ansprüche 2 bis 5, **dadurch gekennzeichnet, dass** R' ein Polyethylenglycol- oder Polypropylenglycolrest ist.

7. Masse nach einem der Ansprüche 1 bis 6, **dadurch gekennzeichnet, dass** die strahlungshärtende Verbindung Acrylsäureestergruppen, Acrylsäureamidgruppen, Methacrylsäureestergruppen, Methacrylsäureamidgruppen oder Mischungen davon enthält.

8. Masse nach einem der Ansprüche 1 bis 7, **dadurch gekennzeichnet, dass** der Katalysator für die Silanvernetzung ein Oxazolidin umfasst.

9. Masse nach einem der vorhergehenden Ansprüche, **dadurch gekennzeichnet, dass** der Katalysator für die Silanvernetzung schwermetallfrei, insbesondere zinnfrei, ist.

10. Masse nach einem der Ansprüche 1 bis 9, **gekennzeichnet durch** eine Vernetzung **durch** Luftfeuchtigkeit bei Raumtemperatur innerhalb 24 Stunden in unbelichteten Bereichen.

11. Masse nach einem der Ansprüche 1 bis 10, **gekennzeichnet durch** eine Aushärtung innerhalb von weniger als einer Minute bei Belichtung.

12. Verwendung einer Masse gemäß den Ansprüchen 1 bis 11 als Kleb- oder Dichtstoff für das Verkleben, Vergießen, Abdichten und Beschichten von Substraten.

13. Verwendung einer Masse nach Anspruch 12 für elektrooptische Bauteile.

14. Verwendung einer Masse gemäß den Ansprüchen 1 bis 11 als Kleb- oder Dichtstoff für die Fixierung oder das Vergießen von Bauteilen, wobei die Bauteile wenigstens eine Schattenzone oder Kapillarspalten aufweisen, in denen durch unzureichende Belichtung keine reine Strahlenhärtung durchführbar ist.

## Claims

1. A single-component, dual curing composition which is liquid at room temperature and is cross-linkable by actinic radiation and by moisture, consisting of
(A) 5 to 80 parts by weight of at least one alpha-(alkoxy)silane compound having one to four alpha-(alkoxy)silane groups, but with the exception of polyolefins substituted with alpha-(alkoxy)silane groups;
(B) 5 to 80 parts by weight of at least one radiation-curing compound having 1-5 radiation-induced, radically polymerizable groups, wherein components (A) and (B) are present as separate compounds;
(C) 0.01 to 20 parts by weight of at least one photoinitiator for radical polymerization;
(D) 0.001 to 20 parts by weight of at least one catalyst for silane cross-linking by moisture, selected from the group consisting of inorganic and organic acids, aliphatic primary, secondary and tertiary monoamines, diamines and polyamines, amidines, aldimines, ketimines, enamines, oxazolidines and heavy metalcontaining metallo-organic compounds, and mixtures thereof;
(E) 0 to 70 parts by weight of at least one modifier, selected from the group consisting of fillers, dyes, pigments, fluorescents, stabilizers, moisture scavengers, accelerators, bonding agents, cross-linkers, plasticizers, wetting agents, thixotropic agents, thinners, flexibilizers, polymeric thickeners, flame retardants, corrosion inhibitors, softeners and tackifiers, alone or in combination with each other;
and
(F) 0 to 30 parts by weight of a silane-based modifier of general formula (III) 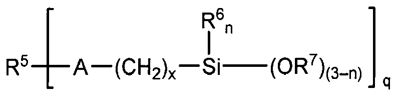 wherein
R⁵ is a linear or branched polymeric backbone with a valency of two to nine, for example a polyether, polyamide, polyester, polycarbonate, polyurethane, polyurea or polyacrylate,
each R⁶ is, independently, a monovalent residue selected from the group consisting of linear, branched or cyclic, saturated, unsaturated or aromatic hydrocarbons which optionally can be halogen-substituted or interrupted by 1 to 3 heteroatoms,
each R⁷ is, independently, hydrogen or a residue selected from the group consisting of linear, branched, cyclic, saturated, unsaturated and aromatic hydrocarbons which optionally can be halogen-substituted or interrupted by 1 to 3 heteroatoms,
A is a heteroatom-containing residue having a valency of 2 or 3 which is bound by a heteroatom, in particular oxygen, nitrogen or sulfur, to the group -(CH₂)ₓ-SiR⁶ₙ(OR⁷)₍₃₋ₙ₎,
n is equal to 0-2,
q is equal to 2-9, and
x is equal to 2-5;
wherein the sum of all parts by weight is 100.

2. Composition as claimed in claim 1, **characterized in that** at least one alpha-alkoxysilane compound corresponds to the following formula (I): 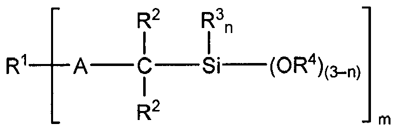 wherein
R¹ is a residue with a valency of one to four selected from the group consisting of (i) linear or branched, saturated or unsaturated alkyl residues having 1 to 8 C-atoms optionally interrupted by 1 to 3 heteroatoms, (ii) saturated or unsaturated cycloalkyl residues having 3-9 C-atoms optionally interrupted by 1 to 3 heteroatoms, (iii) aromatic residues with 5 to 10 C-atoms, (iv) polyether, polyamide, polyester, polycarbonate, polyurethane, polyurea or polyacrylate,
each R² is, independently, a monovalent residue selected from the group consisting of hydrogen, linear, branched, cyclic, saturated, unsaturated and aromatic hydrocarbons, which optionally can be halogen-substituted and/or interrupted by 1 to 3 heteroatoms,
each R³ is, independently, a monovalent residue selected from the group consisting of linear, branched, cyclic, saturated, unsaturated and aromatic hydrocarbons, which optionally can be halogen-substituted or interrupted by 1 to 3 heteroatoms,
each R⁴ is, independently, a monovalent residue selected from the group consisting of hydrogen, linear, branched, cyclic, saturated, unsaturated and aromatic hydrocarbons, which can be optionally halogen-substituted or interrupted by 1 to 3 heteroatoms,
A is a heteroatom-containing residue having a valency of 2 or 3 which is bound by a heteroatom, in particular oxygen, nitrogen or sulfur, to the group -CR²₂-SiR³ₙ(OR⁴)₍₃₋ₙ₎,
m equals 1 to 4, and
n equals 0 to 2.

3. Composition as claimed in claim 2, **characterized in that** R⁴ is a methyl or ethyl group and n is equal to 0 or 1.

4. Composition as claimed in claim 2 or 3, **characterized in that** R² is hydrogen, R³ and R⁴ are methyl groups and n is equal to 1.

5. Composition as claimed in any one of claims 2 to 4, **characterized in that** A in general formula (I) is a carboxy, carbamate, carbonate, ureido, urethane or sulfonate bond, or an oxygen or nitrogen atom.

6. Composition as claimed in any one of claims 2 to 5, **characterized in that** R¹ is a polyethylene glycol or polypropylene glycol residue.

7. Composition as claimed in any one of claims 1 to 6, **characterized in that** the radiation-curing compound contains acrylic ester groups, acrylamide groups, methacrylic ester groups, methacrylamide groups or mixtures thereof.

8. Composition as claimed in any one of claims 1 to 7, **characterized in that** the catalyst for the silane cross-linking comprises an oxazolidine.

9. Composition as claimed in any one of the preceding claims, **characterized in that** the catalyst for the silane cross-linking is free of heavy metals, in particular free of tin.

10. Composition as claimed in any one of the claims 1 to 9, **characterized by** a cross-linking in unexposed zones by humidity at room temperature within 24 hours.

11. Composition as claimed in any one of claims 1 to 10, **characterized by** a curing within less than one minute on exposure to light.

12. Use of a composition as claimed in claims 1 to 11 as an adhesive or sealant for the bonding, filling, sealing and coating of substrates.

13. Use of a composition as claimed in claim 12 for electro-optical components.

14. Use of a composition as claimed in claims 1 to 11 as an adhesive or sealant for the fixation or filling of components, wherein the components have at least one shadow zone or capillary gaps in which pure radiation curing is not possible due to insufficient exposure to light.

## Revendications

1. Composition à un composant à double durcissement qui est liquide à température ambiante et qui est réticulable par rayonnement actinique et par humidité, composée de
(A) 5 à 80 parties en masse d'au moins un composé d'alpha-(alkoxy)silane présentant un à quatre groupes d'alpha-(alkoxy)silane, mais excepté les polyoléfines substituées par des groupes d'alpha-alkoxysilane ;
(B) 5 à 80 parties en masse d'au moins un composé à durcissement par rayonnement présentant 1 à 5 groupes polymérisables par voie radicalaire par induction par rayonnement, les composants (A) et (B) étant présents sous forme de composés séparés ;
(C) 0,01 à 20 parties en masse d'au moins un photo-initiateur pour la polymérisation radicalaire ;
(D) 0,001 à 20 parties en masse d'au moins un catalyseur pour la réticulation de silane par humidité choisi parmi le groupe des acides inorganiques et organiques, des monoamines aliphatiques primaires, secondaires et tertiaires, des diamines et polyamines, des amidines, des aldimines, des cétimines, des énamines, des oxazolidines et des composés organométalliques contenant des métaux lourds, et leurs mélanges ;
(E) 0 à 70 parties en masse d'au moins un modificateur choisi parmi le groupe des matières de remplissage, des colorants, des pigments, des agents fluorescents, des stabilisants, des capteurs d'humidité, des accélérateurs, des agents adhésifs, des agents de réticulation, des agents d'amélioration d'écoulement, des agents mouillants, des agents thixotropes, des diluants, des agents flexibilisants, des épaississants polymères, des agents ignifuges, des additifs anticorrosifs, des plastifiants et des résines tackifiantes, seuls ou en combinaison les uns avec les autres,
et
(F) 0 à 30 parties en masse d'un modificateur à base de silane ayant la formule générale (III) suivante : 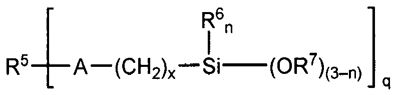 dans laquelle
R⁵ est un squelette polymère linéaire ou ramifié présentant deux à neuf liaisons, par exemple un polyéther, un polyamide, un polyester, un polycarbonate, un polyuréthane, un polycarbamide ou un polyacrylate,
chaque R⁶ est indépendamment un reste monovalent choisi parmi le groupe des hydrocarbures linéaires, ramifiés ou cycliques, saturés, insaturés ou aromatiques qui, le cas échéant, peut être substitué par un halogène ou être interrompu par 1 à 3 hétéroatomes,
chaque R⁷ est indépendamment de l'hydrogène ou un reste choisi parmi le groupe des hydrocarbures linéaires, ramifiés, cycliques, saturés, insaturés et aromatiques qui, le cas échéant, peut être substitué par un halogène ou être interrompu par 1 à 3 hétéroatomes,
A est un reste à deux ou trois liaisons contenant des hétéroatomes qui est lié au groupe -(CH₂)ₓ-SiR⁶ₙ(OR⁷)₍₃₋ₙ₎ par un hétéroatome, en particulier de l'oxygène, de l'azote ou du soufre,
n = 0-2,
q = 2-9, et
x = 2-5,
le total de toutes les parties en masse étant 100.

2. Composition selon la revendication 1, **caractérisée en ce qu'**au moins un composé d'alpha-alkoxysilane correspond à la formule (I) suivante : 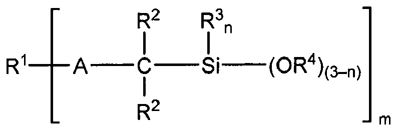 dans laquelle
R¹ est un reste présentant une à quatre liaisons choisi parmi le groupe constitué (i) de groupes alkyles linéaires ou ramifiés, saturés ou insaturés, présentant 1 à 8 atomes de carbone, interrompus, le cas échéant, par 1 à 3 hétéroatomes, (ii) de groupes cycloalkyles saturés ou insaturés présentant 3 à 9 atomes de carbone, interrompus, le cas échéant, par 1 à 3 hétéroatomes, (iii) de restes aromatiques présentant 5 à 10 atomes de carbone, (iv) de polyéther, de polyamide, de polyester, de polycarbonate, de polyuréthane, de polycarbamide ou de polyacrylate,
chaque R² est indépendamment un reste monovalent choisi parmi le groupe constitué d'hydrogène, d'hydrocarbures linéaires, ramifiés, cycliques, saturés, insaturés et aromatiques, qui, le cas échéant, peut être substitué par un halogène et/ou peut être interrompu par 1 à 3 hétéroatomes,
chaque R³ est indépendamment un reste monovalent choisi parmi le groupe des hydrocarbures linéaires, ramifiés, cycliques, saturés, insaturés et aromatiques et qui, le cas échéant, peut être substitué par un halogène ou être interrompu par 1 à 3 hétéroatomes,
chaque R⁴ est indépendamment un reste monovalent choisi parmi le groupe constitué d'hydrogène, d'hydrocarbures linéaires, ramifiés, cycliques, saturés, insaturés et aromatiques, qui, au choix, peut être substitué par un halogène ou être interrompu par 1 à 3 hétéroatomes,
A est un reste à deux ou trois liaisons contenant des hétéroatomes qui est lié au groupe -CR²₂-SiR³ₙ(OR⁴)₍₃₋ₙ₎ par un hétéroatome, en particulier de l'oxygène, de l'azote ou du soufre,
m = 1 à 4, et
n = 0 à 2.

3. Composition selon la revendication 2, **caractérisée en ce que** R⁴ signifie un groupe méthyle ou un groupe éthyle, et n = 0 ou 1.

4. Composition selon la revendication 2 ou 3, **caractérisée en ce que** R² est de l'hydrogène, R³ et R⁴ signifient des groupes méthyles, et n = 1.

5. Composition selon l'une des revendications 2 à 4, **caractérisée en ce que** dans la formule générale (I), A est une liaison carboxyle, carbamate, carbonate, uréide, uréthane ou sulfonate ou signifie un atome d'oxygène ou d'azote.

6. Composition selon l'une des revendications 2 à 5, **caractérisée en ce que** R¹ est un reste de polyéthylène glycol ou de polypropylène glycol.

7. Composition selon l'une des revendications 1 à 6, **caractérisée en ce que** le composé à durcissement par rayonnement contient des groupes d'esters acryliques, des groupes d'acrylamide, des groupes d'esters méthacryliques, des groupes de méthacrylamide, ou des mélanges de ceux-ci.

8. Composition selon l'une des revendications 1 à 7, **caractérisée en ce que** le catalyseur pour la réticulation de silane comprend une oxazolidine.

9. Composition selon l'une des revendications précédentes, **caractérisée en ce que** le catalyseur pour la réticulation de silane est exempt de métaux lourds, en particulier exempt d'étain.

10. Composition selon l'une des revendications 1 à 9, **caractérisée par** une réticulation par humidité de l'air à température ambiante en l'espace de 24 heures dans des zones non exposées à la lumière.

11. Composition selon l'une des revendications 1 à 10, **caractérisée par** un durcissement en l'espace de moins d'une minute lors de l'exposition à la lumière.

12. Utilisation d'une composition selon l'une des revendications 1 à 11 en tant qu'adhésif ou matière d'étanchéité pour le collage, le scellement, l'étanchement et le revêtement de substrats.

13. Utilisation d'une composition selon la revendication 12 pour des composants électro-optiques.

14. Utilisation d'une composition selon l'une des revendications 1 à 11 en tant qu'adhésif ou matière d'étanchéité pour la fixation ou le scellement de composants, les composants présentant au moins une zone d'ombre ou des fentes capillaires dans lesquelles un pur durcissement par rayonnement n'est pas réalisable en raison d'une exposition insuffisante à la lumière.
